(19)

Europäisches
Patentamt
European
Patent Office
Office européen
des brevets

(11)     EP 2 086 219 A2

(12)     **EUROPEAN PATENT APPLICATION**

(43) Date of publication:
05.08.2009  Bulletin 2009/32

(51) Int Cl.:
*H04N 5/21* *(2006.01)*

(21) Application number: 09150591.7

(22) Date of filing: 15.01.2009

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **31.01.2008 JP 2008020474**
**14.02.2008 JP 2008032860**
**13.03.2008 JP 2008063680**
**16.09.2008 JP 2008236083**

(71) Applicant: **Panasonic Corporation**
**Kadoma-shi**
**Osaka 571-8501 (JP)**

(72) Inventors:
• **Fujishima, Akira**
**Osaka, Osaka-shi Japan 540-6207 (JP)**
• **Itou, Hideyuki**
**Osaka, Osaka-shi Japan 540-6207 (JP)**
• **Matsui, Yoshikazu**
**Osaka, Osaka-shi Japan 540-6207 (JP)**
• **Kitamura, Hirokazu**
**Osaka, Osaka-shi Japan 540-6207 (JP)**
• **Yasuda, Masashi**
**Osaka, Osaka-shi Japan 540-6207 (JP)**
• **Satoh, Yuki**
**Osaka, Osaka-shi Japan 540-6207 (JP)**

(74) Representative: **Pautex Schneider, Nicole Véronique et al**
**Novagraaf International SA**
**25, avenue du Pailly**
**1220 Les Avanchets - Geneva (CH)**

(54)     **Noise canceller as well as high-frequency receiver and portable device each using the same**

(57)     A noise canceller of this invention includes a pickup antenna arranged in proximity to a noise signal generation source to extract a noise signal generated by the noise signal generation source, and a noise cancellation unit having a first input for receiving a television signal from a television signal receiving antenna and a second input for receiving the noise signal extracted by the pickup antenna. Herein, the noise cancellation unit removes a noise signal fed from the television signal receiving antenna. Thus, the noise canceller prevents degradation in television signal reception sensitivity due to the noise signal generated by the noise signal generation source.

FIG. 1

**Description**

BACKGROUND OF THE INVENTION

1. Field of the Invention

The present invention relates to a noise canceller for use in a portable telephone, a portable game machine, a portable computer, a portable electronic dictionary and the like, as well as a high-frequency receiver and a portable device each using the same.

2. Description of the Related Art

A recent portable device has been considerably reduced in weight and size because of more reduction in size of constituent components and more integration of semiconductor elements. For this reason, attempts have been actively made to allow such a portable device to have more functions.

Thus, there has been available a portable device having functions as a portable telephone, a portable game machine, a portable computer, a portable electronic dictionary and the like. Further, such a portable device also allows a user to watch a television program (refer to Japanese Patent Unexamined Publication No. 2008-022294).

However, a conventional portable device has the following problem. That is, clock signals generated from the portable device and high-frequency signals of the clock signals are partly fed, as noise signals, into a television signal receiving antenna.

In the portable device, particularly, transmission power for a terrestrial digital television broadcast is made small in consideration of interference upon reception of an existing analogue television broadcast. Consequently, upon reception of the terrestrial digital television broadcast, the portable device is degraded in reception sensitivity in a poor radio wave reception state. Occasionally, a user fails to watch a television program through use of the portable device.

SUMMARY OF THE INVENTION

An object of the present invention is to prevent degradation in television signal reception sensitivity due to a noise signal generated by a noise signal generation source in a portable device.

A noise canceller according to the present invention includes a pickup antenna arranged in proximity to a noise signal generation source to extract a noise signal generated by the noise signal generation source. The noise canceller also includes a noise cancellation unit having a first input for receiving a television signal from a television signal receiving antenna and a second input for receiving the noise signal extracted by the pickup antenna. Herein, the noise cancellation unit removes a noise signal fed from the television signal receiving antenna.

This configuration brings about the following advantage. That is, even when the television signal receiving antenna receives the noise signal generated by the noise signal generation source, the noise canceller can suppress the noise signal. Accordingly, a portable device including the noise canceller can be improved in reception sensitivity upon reception of a television broadcast in a weak electric field area.

BRIEF DESCRIPTION OF THE DRAWINGS

Fig. 1 is a block diagram showing a portable device according to a first embodiment of the present invention;
Fig. 2A is a perspective view showing a lateral side of the portable device according to the first embodiment;
Fig. 2B is a perspective view showing a top side of the portable device according to the first embodiment;
Fig. 3A is a graph showing an input signal inputted to a noise cancellation unit of the portable device according to the first embodiment;
Fig. 3B is a graph showing a noise cancellation signal inputted to the noise cancellation unit of the portable device according to the first embodiment;
Fig. 3C is a graph showing an output signal outputted from the noise cancellation unit of the portable device according to the first embodiment;
Fig. 4A is a plan view showing another pickup antenna of the portable device according to the first embodiment;
Fig. 4B is a plan view showing still another pickup antenna of the portable device according to the first embodiment;
Fig. 5A is a perspective view showing a lateral side of a portable device according to a second embodiment of the present invention;
Fig. 5B is a perspective view showing a top side of the portable device according to the second embodiment;

Fig. 6A is a perspective view showing a lateral side of a portable device according to a third embodiment of the present invention;

Fig. 6B is a perspective view showing a top side of the portable device according to the third embodiment;

Fig. 7A is a perspective view showing a lateral side of a portable device according to a fourth embodiment of the present invention;

Fig. 7B is a perspective view showing a top side of the portable device according to the fourth embodiment;

Fig. 8A is a plan view showing another pickup antenna of the portable device according to the fourth embodiment;

Fig. 8B is a plan view showing still another pickup antenna of the portable device according to the fourth embodiment;

Fig. 9A is a perspective view showing a lateral side of a portable device according to a fifth embodiment of the present invention;

Fig. 9B is a perspective view showing a top side of the portable device according to the fifth embodiment;

Fig. 10A is a perspective view showing a lateral side of a portable device according to a sixth embodiment of the present invention;

Fig. 10B is a perspective view showing a top side of the portable device according to the sixth embodiment;

Fig. 11A is a schematic view showing a pickup antenna of a portable device according to a seventh embodiment of the present invention;

Fig. 11B is a schematic view showing another pickup antenna of the portable device according to the seventh embodiment; and

Fig. 12 is a block diagram showing a portable device according to an eighth embodiment of the present invention.

DESCRIPTION OF THE PREFERRED EMBODIMENTS

With reference to the drawings, hereinafter, description will be given of preferred embodiments of the present invention; however, it should be understood that the present invention is not limited to these embodiments.

(First Embodiment)

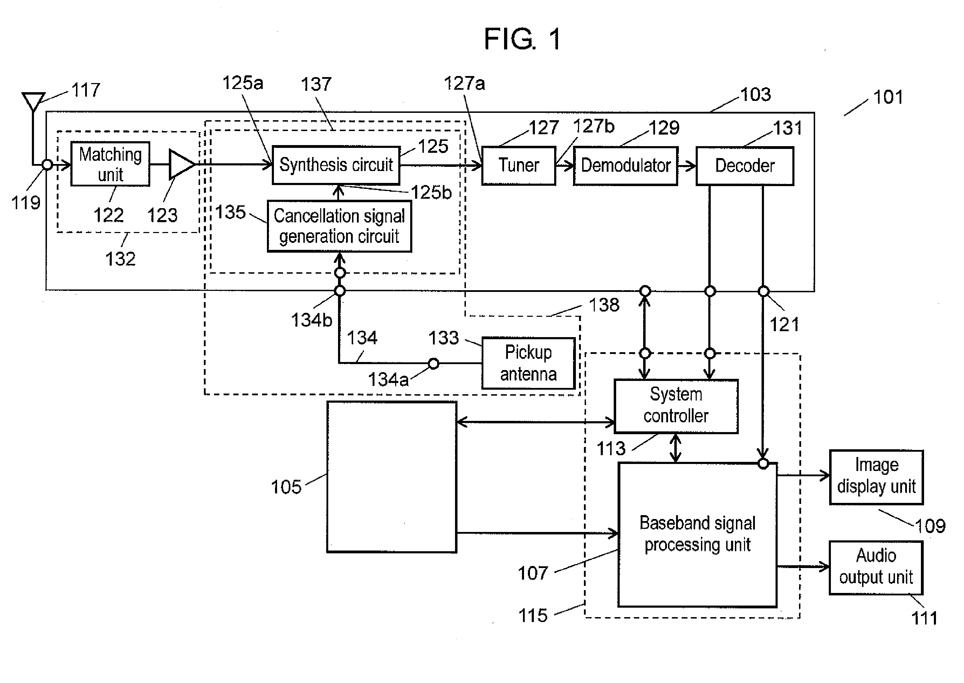

With reference to Fig. 1, hereinafter, description will be given of a first embodiment of the present invention. Fig. 1 is a block diagram showing a portable device according to the first embodiment of the present invention. In this embodiment, description will be given of portable device 101 capable of receiving a digital television signal in a UHF (Ultra High Frequency) band.

Portable device 101 includes high-frequency receiver 103 that receives a digital television signal from television signal receiving antenna 117. Portable device 101 also includes main body 105 that has functions as a portable telephone, a portable game machine, a portable computer, a portable electronic dictionary and the like. Portable device 101 also includes baseband signal processing unit 107 to which an output of high-frequency receiver 103 and an output of main body 105 are connected. Portable device 101 also includes image display unit 109 and audio output unit 111 each receiving a signal from baseband signal processing unit 107. Portable device 101 also includes system controller 113 that controls baseband signal processing unit 107, high-frequency receiver 103 and main body 105. Herein, baseband signal processing unit 107 and system controller 113 form image formation unit 115.

High-frequency receiver 103 is provided with input terminal 119 for receiving a television signal from television signal receiving antenna 117 and output terminal 121 for outputting a transport stream (TS) signal. Input terminal 119 is connected to matching unit 122 that performs input impedance matching for television signal receiving antenna 117. Matching unit 122 is connected to high-frequency amplifier 123 that amplifies a high-frequency signal. High-frequency amplifier 123 is connected to synthesis circuit 125 that has first input 125a for receiving an output signal from high-frequency amplifier 123. Synthesis circuit 125 is connected to tuner 127, and tuner 127 is connected to demodulator 129 that performs digital modulation on a digital signal. Demodulator 129 is connected to decoder 131 that performs signal processing including error correction and decoding, and decoder 131 is connected to output terminal 121. Herein, matching unit 122 and high-frequency amplifier 123 form antenna matching unit 132.

Synthesis circuit 125 also has second input 125b to which an output of cancellation signal generation circuit 135 is connected. Cancellation signal generation circuit 135 has an input for receiving a noise signal, which is extracted by pickup antenna 133, through input terminal 134a and interconnection 134. Herein, cancellation signal generation circuit 135 and synthesis circuit 125 form noise cancellation unit 137. Moreover, noise cancellation unit 137 and pickup antenna 133 form noise canceller 138. Pickup antenna 133 has a first end which is open and a second end which is connected to input terminal 134a. An input section in tuner 127 is provided with at least a high-frequency amplifier (not shown) capable of performing gain control and a mixer (not shown). Herein, the high-frequency amplifier and the mixer are arranged side by side in this order in a direction from input 127a to output 127b. In this embodiment, a first input of noise cancellation unit 137 corresponds to first input 125a of synthesis circuit 125. Moreover, second input 134b of noise cancellation unit 137 corresponds to a connection portion with interconnection 134 connected to pickup antenna 133.

With reference to Fig. 1, next, description will be given of operation of portable device 101 configured as described above. First, description will be given of operation of each of main body 105, image formation unit 115, image display unit 109 and audio output unit 111. Main body 105 has the functions as the portable telephone, the portable game machine, the portable computer, the portable electronic dictionary and the like. Main body 105 outputs a baseband signal to baseband signal processing unit 107. System controller 113 controls main body 105, baseband signal processing unit 107 and image display unit 109. Baseband signal processing unit 107 outputs a video signal to image display unit 109, and image display unit 109 displays an image based on the video signal. Baseband signal processing unit 107 also outputs an audio signal to audio output unit 111.

Next, description will be given of operation of high-frequency receiver 103. Television signal receiving antenna 117 receives not only a television signal, but also an unnecessary noise signal from the noise signal generation source. Television signal receiving antenna 117 feeds these signals to antenna matching unit 132. Antenna matching unit 132 is configured with matching unit 122 which is provided in proximity to television signal receiving antenna 117 and high-frequency amplifier 123 which is subsequent to matching unit 122, and performs impedance matching. Antenna matching unit 132 outputs the television signal to noise cancellation unit 137. Noise cancellation unit 137 performs noise cancellation on the unnecessary noise signal, which is fed into television signal receiving antenna 117, based on a noise signal extracted by pickup antenna 133.

Noise cancellation unit 137 outputs the television signal subjected to the noise cancellation to input 127a of tuner 127. Tuner 127 outputs, from output 127b, an intermediate-frequency signal or a baseband signal which is subjected to gain control in tuner 127 and then is subjected to frequency conversion by the mixer. The intermediate-frequency signal or the baseband signal is inputted to demodulator 129. Demodulator 129 outputs a demodulation signal to decoder 131. Decoder 131 outputs, from output terminal 121, a TS signal to baseband signal processing unit 107. Baseband signal processing unit 107 outputs a video signal to image display unit 109. Baseband signal processing unit 107 also outputs an audio signal to audio output unit 111.

System controller 113 selects one of received channels of high-frequency receiver 103, and controls demodulator 129 and decoder 131.

As described above, the television signal can be received by high-frequency receiver 103, image formation unit 115, image display unit 109 and audio output unit 111 mainly. However, high-frequency receiver 103 capable of receiving the television signal is used while being incorporated in a portable telephone, a portable game machine, a portable computer, a portable electronic dictionary or the like. On the other hand, such a portable device is reduced in size increasingly.

As a result of improvement in performance and reduction in size as a portable device, there occurs the following problem. That is, high-frequency signals of clock signals for control of image formation unit 115 and image display unit 109 and a high-frequency signal from an oscillator exert an adverse influence on reception sensitivity upon reception of a television broadcast in a weak electric field area.

For example, this reception sensitivity is degraded in a case where the high-frequency signals of the clock signals and the high-frequency signal from the oscillator are equal in frequency to a UHF television signal. Particularly, in a so-called one-segment broadcast which has commenced in recent years, power for transmission signals is originally set to be small in consideration of interference of analogue signals. Consequently, when a user watches a television program through use of a portable device at a place where a television signal reception level is low, clock signals from the portable device and a high-frequency signal from an oscillator significantly exert an adverse influence on the reception sensitivity of the portable device. In particular, the reception sensitivity is degraded upon reception of a television broadcast in a weak electric field area.

Next, description will be given of operation of noise canceller 138 for improving the reception sensitivity. In noise canceller 138, pickup antenna 133 extracts a noise signal generated by the noise signal generation source. The extracted noise signal is subjected to phase adjustment and level adjustment in cancellation signal generation circuit 135. Then, the resultant noise cancellation signal is inputted to second input 125b of synthesis circuit 125. Synthesis circuit 125 synthesizes the noise signal received at first input 125a and the noise cancellation signal outputted from cancellation signal generation circuit 135 and received at second input 125b. Thus, the noise signal is subjected to phase cancellation.

The television signal, from which the noise signal is removed by the phase cancellation, is inputted to decoder 131 through tuner 127 and demodulator 129. Decoder 131 detects a BER (Bit Error Rate) or a C/N (Carrier to Noise Ratio) to determine reception quality, for example. Based on a reception quality detection signal, system controller 113 controls start/stop of the operation of noise cancellation unit 137. Herein, a signal line for control is not shown in Fig. 1.

As described above, system controller 113 allows noise cancellation unit 137 to perform the operation for the phase cancellation and allows decoder 131 to perform the operation for the detection and determination in a repetitive manner. Finally, the amplitude and the phase of cancellation signal generation circuit 135 can be set at an optimal value, respectively. Similarly, a signal line for control is not shown in Fig. 1.

Thus, even when a noise signal resulting from a clock signal generated from portable device 101 or a high-frequency signal of the clock signal is fed into television signal receiving antenna 117 upon reception of a television signal, noise canceller 138 can cancel the noise signal.

Herein, if a desired channel of television signal receiving antenna 117 is in a weak electric field, a noise signal is fed into television signal receiving antenna 117, which causes interference. Good reception quality requires no necessity of actuating noise cancellation unit 137.

For example, the weak electric field is detected by a gain control voltage of the amplifier incorporated in tuner 127, so that the operation of noise cancellation unit 137 can be controlled based on a result of the detection. This detection using the gain control voltage is higher in speed than the detection of the reception quality using the BER or the C/N, and can bring about an advantage in a high-speed moving state.

Moreover, an advantage similar to that described above can also be obtained in such a manner that noise cancellation unit 137 is connected between input 127a of tuner 127 and an input of the high-frequency amplifier for gain control in tuner 127. This case allows suppression in degradation of a noise index in high-frequency receiver 103 due to insertion of noise cancellation unit 137.

Further, noise cancellation unit 137 may be connected between an output of the high-frequency amplifier for gain control incorporated in tuner 127 and an input of the mixer also incorporated in tuner 127. This case allows reduction in degradation of a noise index in high-frequency receiver 103 due to insertion loss and matching loss of noise cancellation unit 137, leading to less degradation in reception sensitivity.

Herein, examples of television signal receiving antenna 117 may include a printed pattern, a metallic line and a micro strip line. Further, examples of television signal receiving antenna 117 may include a patch antenna, an inverted F antenna and an inverted L antenna.

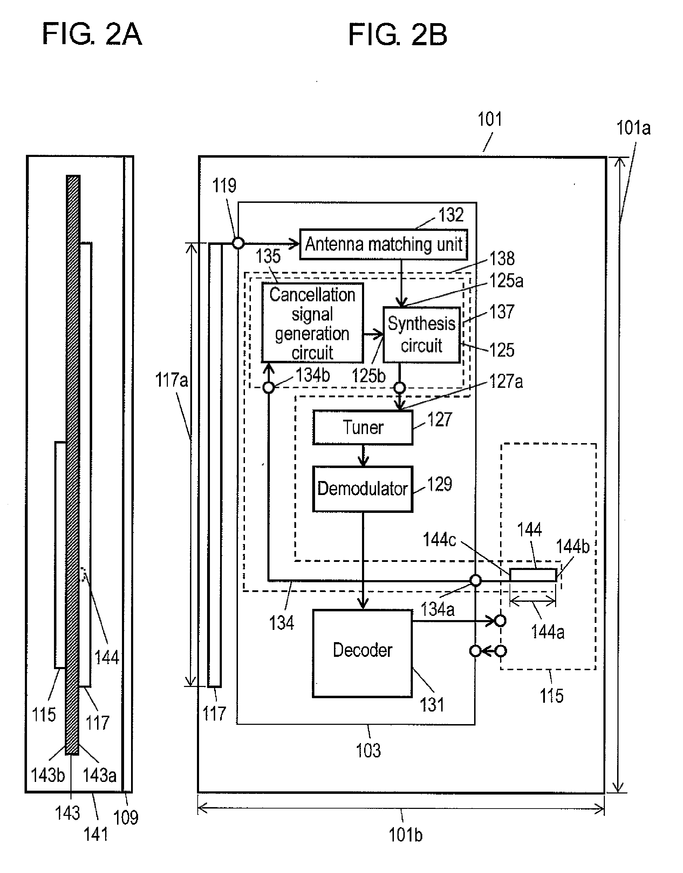

Fig. 2A shows a layout of the respective blocks in portable device 101 according to this embodiment, and is a perspective view showing a lateral side of portable device 101. Fig. 2B also shows the layout, and is a perspective view showing a top side of portable device 101. As shown in Figs. 2A and 2B, high-frequency receiver 103 and television signal receiving antenna 117 are arranged at top face 143a of substrate 143 in casing 141. Moreover, image formation unit 115 is arranged at bottom face 143b of substrate 143. Further, image display unit 109 is provided at a position above substrate 143.

In Figs. 2A and 2B, pickup antenna 144, which is a linear printed pattern, is used as pickup antenna 133 shown in Fig. 1. Pickup antenna 144 has first end 144c which is connected to cancellation signal generation circuit 135 through input terminal 134a of high-frequency receiver 103 and second end 144b which is open.

Next, description will be given of a relation of arrangement among the noise signal generation source, pickup antenna 144 and television signal receiving antenna 117 in portable device 101.

First, pickup antenna 144 is arranged in proximity to image formation unit 115 serving as a noise signal generation source. Television signal receiving antenna 117 is arranged so as to be spaced away from image formation unit 115 and image display unit 109 each serving as a noise signal generation source. In other words, image formation unit 115 is provided on a first side of substrate 143, and pickup antenna 144 is provided on the first side or a second side of substrate 143 so as to be located in proximity to image formation unit 115. This configuration allows secure coupling between pickup antenna 144 and the noise signal generation source. Moreover, since the noise signal generation source and television signal receiving antenna 117 are arranged so as to be spaced away from each other, no noise signal is fed from the noise signal generation source to television signal receiving antenna 117.

Next, pickup antenna 144 is arranged at an angle which is almost perpendicular to television signal receiving antenna 117. In the weak electric field area, for example, the user of portable device 101 directs television signal receiving antenna 117 in a direction perpendicular to or almost perpendicular to a direction from which a television signal is transmitted, thereby watching a television program in a favorable reception state. In this case, pickup antenna 144 is arranged at the angle which is almost perpendicular to television signal receiving antenna 117, leading to minimization of a television signal reception level of pickup antenna 144. Thus, pickup antenna 144 can satisfactorily receive required noise signals from the noise signal generation source, and can satisfactorily suppress the reception level of unnecessary television signals.

Further, pickup antenna 144 has length 144a which is shorter than length 117a of television signal receiving antenna 117. For example, length 144a is one-sixteenth of a wavelength of a television signal. This configuration brings about the following advantage. That is, even in a case where a television signal is inputted to television signal receiving antenna 117 in a direction other than a vertical direction, an amount of television signals to be inputted to pickup antenna 144 can be reduced at minimum.

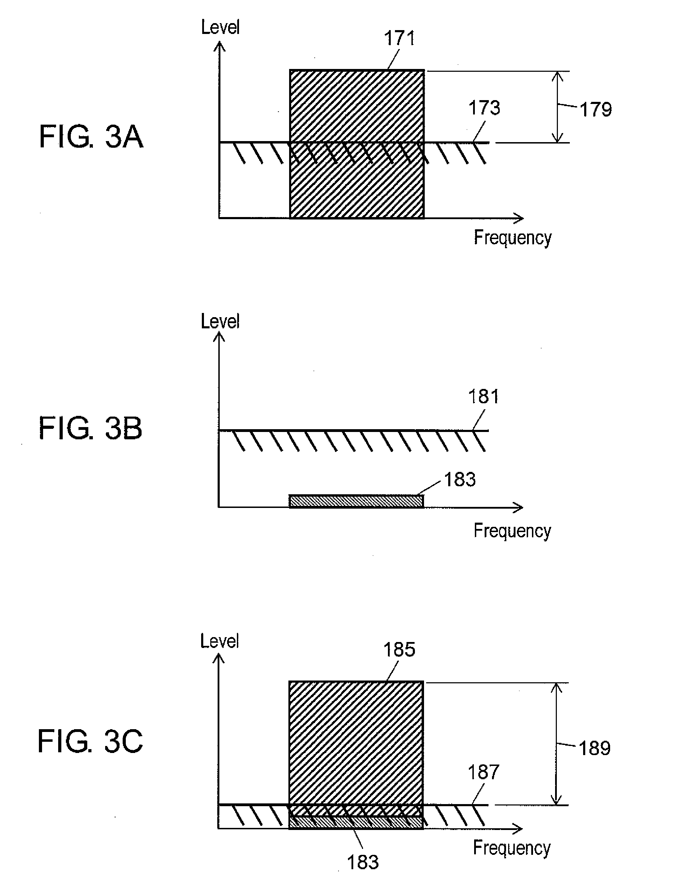

With reference to Figs. 3A to 3C, next, description will be given of the reasons therefor. Fig. 3A shows television signal 171 and noise signal 173 each of which is received at television signal receiving antenna 117 and then is inputted to first input 125a of synthesis circuit 125. In Fig. 3A, an abscissa represents a frequency and an ordinate represents a level. In Fig. 3A, required Co/No (television signal level to noise signal level) 179 is not less than 4.9 dB. Herein, the value of 4.9 dB corresponds to a required C/N in 1/2 QPSK (Quadrature Phase Shift Keying) reception of a one-segment broadcast, for example.

Fig. 3B shows noise signal 181 and television receiving signal 183 each of which is extracted by pickup antenna 144 and then is inputted to second input 125b of synthesis circuit 125. Fig. 3C shows television receiving signal 185 and noise signal 187 after synthesis of the signals shown in Fig. 3A and the signals shown in Fig. 3B by synthesis circuit 125. In order to cancel noise in synthesis circuit 125, noise signal 173 is made equal in level to noise signal 181.

In Fig. 3C, when a noise cancellation effect is 3 dB, noise signal 173 is turned into noise signal 187 and the level thereof is made small by a value of 3 dB. As represented by the following equation (1), accordingly, C/N 189 between television receiving signal 185 and noise signal 187 can be improved so as to have a value of about 8 dB.

$$C/N = Co/No + Vo$$
$$= 4.9 + 3 \tag{1}$$
$$\cong 8dB$$

Co/No: Required C/N in QPSK reception of one-segment broadcast
Vo: Noise improvement level in noise cancellation unit 137

Herein, if television receiving signal 183 extracted by pickup antenna 144 is larger than noise signal 187 subjected to the noise cancellation, the degree of improvement becomes poor. In order to avoid this disadvantage, television receiving signal 183 must be made smaller by a value of not less than about 3 dB as compared with noise signal 181, with regard to the input signal level to second input 125b of synthesis circuit 125.

Herein, description will be given of a case where the length of pickup antenna 144 is one-sixteenth of a wavelength of a television signal (in a range between 470 MHz and 770 MHz). The following equation (2) represents a ratio between television receiving signal level V (1/4 wavelength) at television signal receiving antenna 117 having a 1/4 wavelength and television receiving signal level V (1/16 wavelength) at pickup antenna 144 having a 1/16 wavelength.

$$\frac{V(1/4 wavelength)}{V(1/16 wavelength)} = \frac{20\log(\sin(2\pi \times 1/4))}{20\log(\sin(2\pi \times 1/16))} = \frac{1}{-8.3} \cong 8dB \tag{2}$$

V (1/4 wavelength): Television receiving signal level of television signal receiving antenna having 1/4 wavelength
V (1/16 wavelength): Television receiving signal level of pickup antenna having 1/16 wavelength

Thus, a result of (V (1/4 wavelength)/V (1/16 wavelength)) can be set at a value of about 8 dB. Accordingly, television receiving signal 183 extracted by pickup antenna 144 can be made small by a value of not less than about 8 dB as compared with television receiving signal 185 received at television signal receiving antenna 117.

In the weak electric field area, as described above, the user of portable device 101 directs television signal receiving antenna 117 in a direction perpendicular to or almost perpendicular to the direction from which the television signal is transmitted, thereby watching a television program in a favorable reception state. In this case, pickup antenna 144 is arranged at the angle almost perpendicular to television signal receiving antenna 117, leading to minimization of the television signal reception level of pickup antenna 144. Thus, pickup antenna 144 can satisfactorily receive required noise signals from the noise signal generation source, and can satisfactorily suppress the reception level of television signals.

Thus, even when television signal receiving antenna 117 receives a noise signal resulting from a clock signal generated from portable device 101 or a high-frequency signal of the clock signal upon reception of a television signal, system controller 113 can optimize a phase and a gain of cancellation signal generation circuit 135. As a result, noise canceller 138 can cancel only the noise signal fed into television signal receiving antenna 117.

In high-frequency receiver 103 including noise canceller 138, even when the noise signal generation source is provided in proximity to television signal receiving antenna 117, noise canceller 138 can eliminate an adverse influence due to a noise signal generated by the noise signal generation source. Accordingly, portable device 101 can be reduced in size.

Further, system controller 113 stores data about the optimized phase and the optimized gain in noise cancellation unit 137, for each channel. Upon next reception of a television signal, system controller 113 can control optimization of the phase and the gain of noise cancellation unit 137, through use of the stored data. This configuration realizes a portable device capable of receiving a desired channel in a short time.

In a case where the portable device is a portable telephone, a large transmission signal is outputted from a portable telephone antenna provided on main body 105 during a phone conversation or in a standby state. This transmission signal is defined as a noise signal and is subjected to phase cancellation using noise canceller 138.

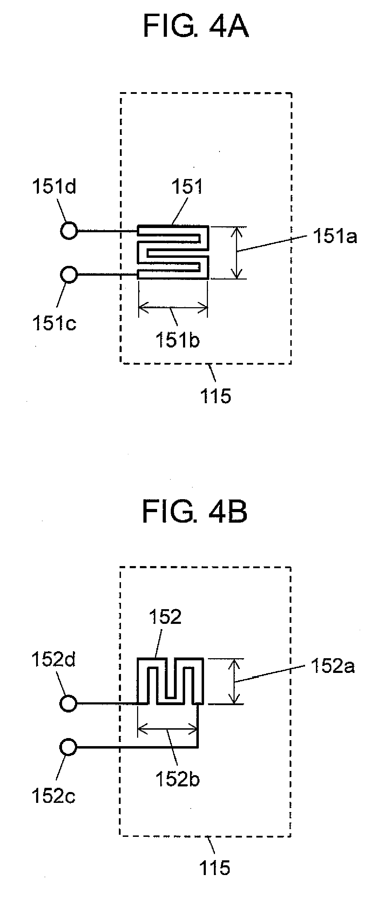

Figs. 4A and 4B are plan views each showing another example of pickup antenna 144. Each of pickup antenna 151 shown in Fig. 4A and pickup antenna 152 shown in Fig. 4B is a zigzag printed pattern.

As shown in Fig. 4A, pickup antenna 151 has vertical length 151a and horizontal length 151b. Herein, horizontal length 151b is defined as a longitudinal direction, and this longitudinal direction is almost perpendicular to an extending direction of television signal receiving antenna 117. Moreover, pickup antenna 151 has output terminal 151c which is connected to input terminal 134a (see Fig. 1) and output terminal 151d which is open.

As shown in Fig. 4B, pickup antenna 152 has vertical length 152a and horizontal length 152b. Herein, horizontal length 152b is defined as a longitudinal direction, and this longitudinal direction is almost perpendicular to the extending direction of television signal receiving antenna 117. Moreover, pickup antenna 152 has output terminal 152c which is connected to input terminal 134a (see Fig. 1) and output terminal 152d which is open.

As described above, use of the zigzag printed pattern allows reduction in size of pickup antennas 151 and 152. Accordingly, pickup antennas 151 and 152 can be made smaller in television signal reception level than linear pickup antenna 144. In addition to the pickup antenna which is the zigzag printed pattern, the advantage described above can also be obtained by a pickup antenna which is a curved printed pattern. Herein, a micro-strip line or a metallic line may be used as pickup antennas 144, 151 and 152, for example.

As shown in Fig. 1, moreover, interconnection 134 such as a printed pattern establishes connection between pickup antenna 133 and cancellation signal generation circuit 135. If interconnection 134 has a large wiring length, a television signal is disadvantageously fed into interconnection 134. As a result, noise cancellation unit 137 cancels the television signal. In order to avoid this disadvantage, for example, interconnection 134 may be shielded.

Further, the degradation in noise canceling operation due to the feeding of the television signal into interconnection 134 can be improved in such a manner that the high-frequency amplifier is connected between pickup antenna 133 and cancellation signal generation circuit 135 so as to be located in proximity to the output of pickup antenna 133. This configuration brings about the following advantage. That is, even when the television signal is fed into interconnection 134, pickup antenna 133 amplifies the noise signal level to increase a ratio between the level of the noise signal to be inputted to cancellation signal generation circuit 135 and the level of the television signal level to be inputted to cancellation signal generation circuit 135.

(Second Embodiment)

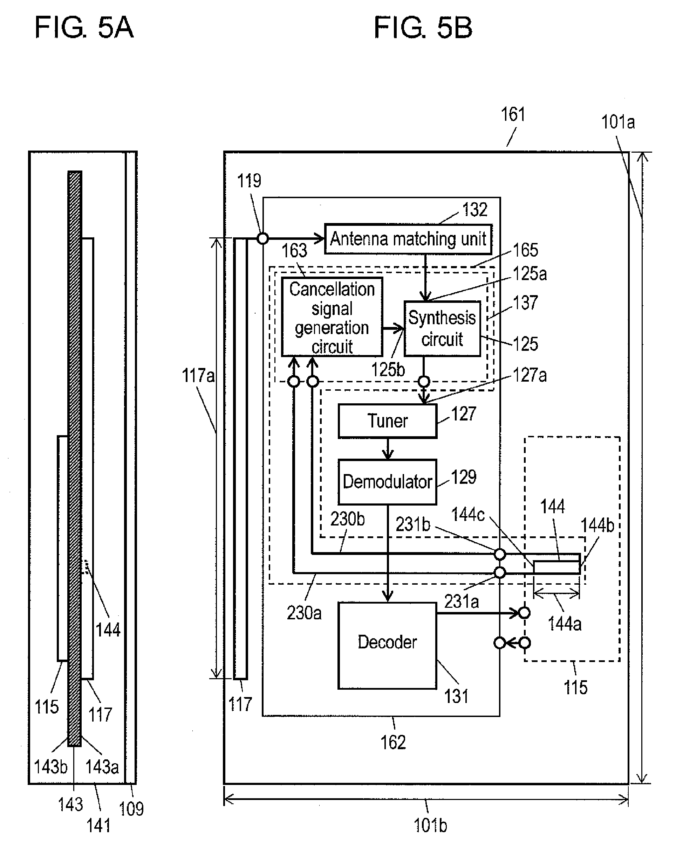

With reference to Figs. 1, 5A and 5B, hereinafter, description will be given of a second embodiment of the present invention. Fig. 5A is a perspective view showing a lateral side of each block in a portable device according to the second embodiment of the present invention. Fig. 5B is a perspective view showing a top side of each block in the portable device. Portable device 161 according to this embodiment is different from portable device 101 shown in Figs. 2A and 2B in terms of the following point. That is, in portable device 161, balancing circuits 230a and 230b establish connection between pickup antenna 144 and cancellation signal generation circuit 163. Portable device 161 includes high-frequency receiver 162 to which television signal receiving antenna 117 and pickup antenna 144 are connected. High-frequency receiver 162 is provided with input terminal 231a connected to balancing circuit 230a and input terminal 231b connected to balancing circuit 230b. Herein, pickup antenna 144 and noise cancellation unit 137 form noise canceller 165. In portable device 161, balancing circuits 230a and 230b establish the connection between pickup antenna 144 and cancellation signal generation circuit 163. Therefore, even when a television signal is fed into an interconnection of each of balancing circuits 230a and 230b, cancellation signal generation circuit 163 performs phase cancellation on the fed television signal.

Moreover, it is preferable that pickup antenna 144 may also be a balancing circuit, in addition to balancing circuits 230a and 230b. With this configuration, even when a television signal is fed into pickup antenna 144, cancellation signal generation circuit 163 can cancel the fed television signal.

Moreover, the feeding of the television signal into balancing circuits 230a and 230b can be prevented in such a manner that a high-frequency amplifier having a balancing input and a balancing output is connected between pickup antenna 144 and cancellation signal generation circuit 163 so as to be located in proximity to an output of pickup antenna 144. This configuration can bring about the following advantage. That is, even when a television signal is fed into each of balancing circuits 230a and 230b, the high-frequency amplifier amplifies a level of a noise signal generated from pickup antenna 144 to increase a ratio between a level of a noise signal to be inputted to cancellation signal generation circuit 163 and a level of a television signal to be inputted to cancellation signal generation circuit 163.

Further, pickup antenna 151 shown in Fig. 4A or pickup antenna 152 shown in Fig. 4B may be used in place of pickup antenna 144. That is, pickup antenna 151 (see Fig. 4A) can be used in such a manner that output terminals 151c and 151d (see Fig. 4A) thereof are connected to input terminals 231a and 231b (see Fig. 5B), respectively. Alternatively, pickup antenna 152 (see Fig. 4B) can be used in such a manner that output terminals 152c and 152d (see Fig. 4B) thereof are connected to input terminals 231a and 231b (see Fig. 5B), respectively. Moreover, each of pickup antennas 151 and 152 has a longitudinal direction which is almost perpendicular to an extending direction of television signal receiving antenna 117.

Thus, each of pickup antennas 151 and 152 can be reduced in size. Moreover, pickup antennas 151 and 152 can be made smaller in television signal reception level than pickup antenna 144. Accordingly, noise cancellation unit 137 can perform phase cancellation on a noise signal with certainty, without performing phase cancellation on a television signal.

An advantage similar to that described above can also be obtained even when a micro strip line or a metallic line is used as pickup antennas 144, 151 and 152.

(Third Embodiment)

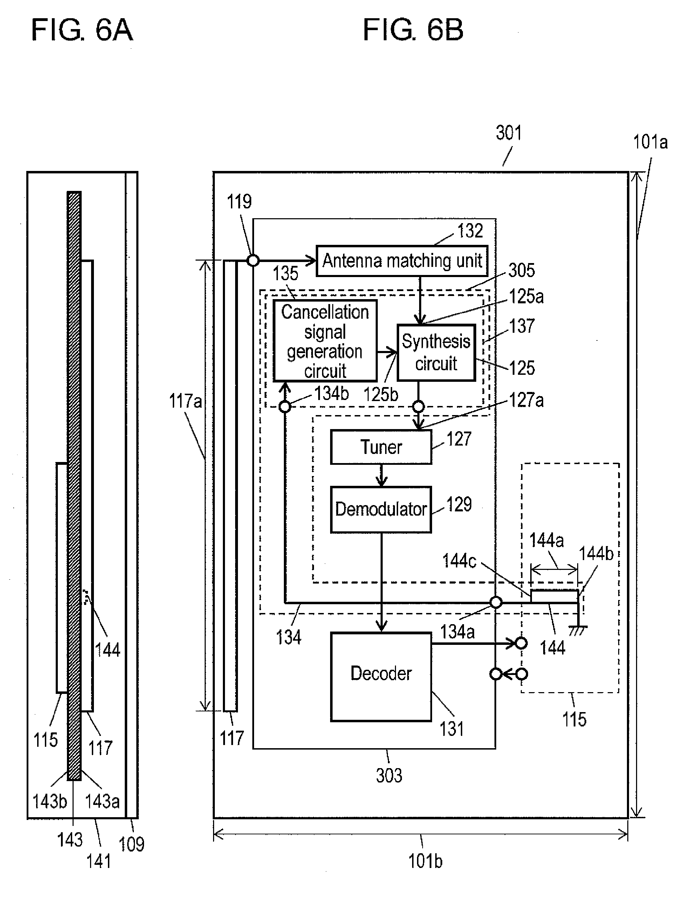

With reference to Figs. 1, 6A and 6B, hereinafter, description will be given of a third embodiment of the present invention. Fig. 6A is a perspective view showing a lateral side of each block in a portable device according to the third embodiment of the present invention. Fig. 6B is a perspective view showing a top side of each block in the portable device. Portable device 301 according to this embodiment is different from portable device 101 shown in Figs. 2A and 2B in terms of the following point. That is, in portable device 301, pickup antenna 144 has first end 144b connected to a ground.

Portable device 301 includes high-frequency receiver 303 to which television signal receiving antenna 117 and pickup antenna 144 are connected. Herein, pickup antenna 144 and noise cancellation unit 137 form noise canceller 305. First end 144b of pickup antenna 144 is connected to the ground located in proximity to image formation unit 115 serving as a noise signal generation source. With this configuration, one ground is shared between pickup antenna 144 and image formation unit 115; therefore, pickup antenna 144 can pick up a noise signal component from image formation unit 115 with certainty. Moreover, pickup antenna 144 can be satisfactorily reduced in impedance and, therefore, receives no television signal.

Herein, a process of shielding interconnection 134 provided between pickup antenna 144 and cancellation signal generation circuit 135 is similar to that shown in Figs. 2A and 2B.

Further, pickup antenna 151 shown in Fig. 4A or pickup antenna 152 shown in Fig. 4B may be used in place of pickup antenna 144. That is, pickup antenna 151 (see Fig. 4A) can be used in such a manner that output terminal 151c (see Fig. 4A) thereof is connected to input terminal 134a while output terminal 151d (see Fig. 4A) thereof is connected to the ground of image formation unit 115. Alternatively, pickup antenna 152 (see Fig. 4B) can be used in such a manner that output terminal 152c (see Fig. 4B) thereof is connected to input terminal 134a while output terminal 152d (see Fig. 4B) thereof is connected to the ground of image formation unit 115.

Thus, pickup antennas 151 and 152 can be reduced in size. Moreover, pickup antennas 151 and 152 have lengths 151b and 152b each defined as a longitudinal direction, and this longitudinal direction is almost perpendicular to an extending direction of television signal receiving antenna 117. Accordingly, pickup antennas 151 and 152 can be made smaller in television signal reception level than pickup antenna 144. With this configuration, noise cancellation unit 137 can perform phase cancellation on a noise signal with certainty, without performing phase cancellation on a television signal.

An advantage similar to that described above can also be obtained even when a micro strip line or a metallic line is used as pickup antennas 144, 151 and 152, for example.

(Fourth Embodiment)

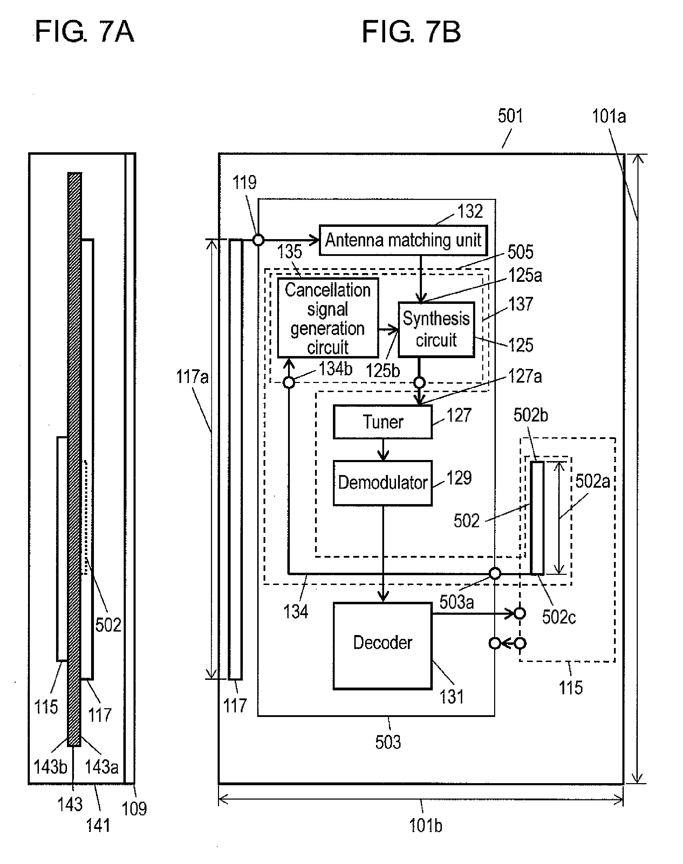

With reference to Figs. 1, 7A and 7B, hereinafter, description will be given of a fourth embodiment of the present invention. Fig. 7A is a perspective view showing a lateral side of each block in a portable device according to the fourth embodiment of the present invention. Fig. 7B is a perspective view showing a top side of each block in the portable device.

Portable device 501 according to this embodiment is different from portable device 101 according to the first embodiment shown in Figs. 2A and 2B, portable device 161 according to the second embodiment shown in Figs. 5A and 5B and portable device 301 according to the third embodiment shown in Figs. 6A and 6B in terms of the following point. That is, portable device 501 includes noise canceller 505 configured with linear pickup antenna 502 which is a linear printed pattern and is arranged in almost parallel with television signal receiving antenna 117.

Portable device 501 also includes high-frequency receiver 503 to which television signal receiving antenna 117 and pickup antenna 502 are connected. Herein, pickup antenna 502 and noise cancellation unit 137 form noise canceller 505. Pickup antenna 502 has first end 502c which is connected to cancellation signal generation circuit 135 through input terminal 503a of high-frequency receiver 503 and second end 502b which is open.

Pickup antenna 502, which is a printed pattern, is arranged in proximity to image formation unit 115 serving as a noise signal generation source. For example, a noise signal can be extracted with certainty in such a manner that image formation unit 115 is provided on bottom face 143b of substrate 143 while pickup antenna 502 is provided on top face 143a or bottom face 143b of substrate 143 so as to be located in proximity to image formation unit 115.

In this embodiment, if a linear printed pattern is used as pickup antenna 502, pickup antenna 502 is arranged in almost parallel with a longitudinal direction of television signal receiving antenna 117. Further, pickup antenna 502 has length 502a which is made shorter than length 117a of television signal receiving antenna 117.

Herein, examples of television signal receiving antenna 117 may include a printed pattern, a metallic line and a micro strip line. Further, examples of television signal receiving antenna 117 may also include a patch antenna, an inverted F antenna and an inverted L antenna. It is preferable that length 502a of pickup antenna 502 in the longitudinal direction is arranged in almost parallel with the longitudinal direction of such an antenna.

Next, description will be given of a direction from which a television broadcast signal is transmitted and an orientation of television signal receiving antenna 117. In a case where portable device 501 receives a television signal in a weak electric field area, there occurs the following problem. That is, television signal receiving antenna 117 receives a noise signal from a noise signal generation source incorporated in portable device 501, so that portable device 501 is degraded in reception sensitivity.

In this case, a user of portable device 501 watches a TV program in a state that television signal receiving antenna 117 is oriented in a direction which is perpendicular to or almost perpendicular to the direction from which the television broadcast signal is transmitted. On the other hand, pickup antenna 502 is arranged in almost parallel with television signal receiving antenna 117. Therefore, if the orientation of television signal receiving antenna 117 is changed, the orientation of pickup antenna 502 is also changed. Thus, pickup antenna 502 can be constantly made smaller in television signal reception level than television signal receiving antenna 117 at a predetermined rate. Accordingly, there is no possibility that cancellation signal generation circuit 135 incurs an adverse influence due to a television signal received at pickup antenna 502. Thus, system controller 113 can optimize a phase and a gain of cancellation signal generation circuit 135.

As described above, pickup antenna 502 is arranged in almost parallel with television signal receiving antenna 117. With this configuration, even when the orientation of television signal receiving antenna 117 is changed with respect to the direction from which the television signal is transmitted, pickup antenna 502 can be constantly made smaller in television signal reception level than television signal receiving antenna 117 at the predetermined rate.

Thus, even when television signal receiving antenna 117 receives a noise signal resulting from a clock signal generated from portable device 501 or a high-frequency signal of the clock signal upon reception of a television signal, noise canceller 138 can cancel the noise signal with good accuracy.

Moreover, system controller 113 stores data about the optimized phase and the optimized gain, for each channel. Upon next reception of a television signal, system controller 113 can control optimization of the phase and the gain of noise cancellation unit 137, through use of the stored data. Accordingly, portable device 501 can receive a desired channel in a short time.

Herein, interconnection 134 such as a printed pattern establishes connection between pickup antenna 502 and cancellation signal generation circuit 135. However, if interconnection 134 has a long wiring length, a television signal is disadvantageously fed into interconnection 134. If the fed television signal is larger than a noise signal subjected to noise cancellation, a noise cancellation effect of noise cancellation unit 137 is impaired.

In order to avoid this disadvantage, interconnection 134 may be shielded, for example. Alternatively, a high-frequency amplifier may be connected between pickup antenna 502 and cancellation signal generation circuit 135 so as to be located in proximity to an output of pickup antenna 502.

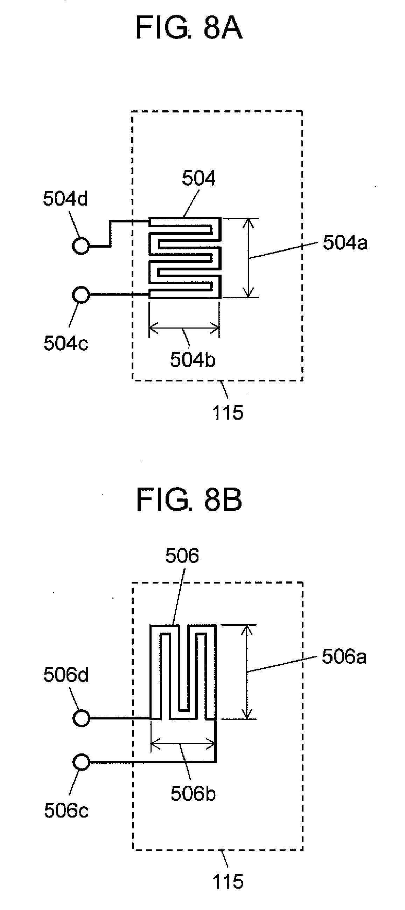

Figs. 8A and 8B are plan views each showing another example of pickup antenna 502. Each of pickup antenna 504 shown in Fig. 8A and pickup antenna 506 shown in Fig. 8B is a zigzag printed pattern. As shown in Fig. 8A, pickup antenna 504 has vertical length 504a and horizontal length 504b. Vertical length 504a is defined as a longitudinal direction, and this longitudinal direction (length 504a) is almost parallel with an extending direction of television signal receiving antenna 117. Moreover, pickup antenna 504 has output terminal 504c which is connected to input terminal 503a (see Fig. 7B) and output terminal 504d which is open.

As shown in Fig. 8B, pickup antenna 506 has vertical length 506a and horizontal length 506b. Vertical length 506a is defined as a longitudinal direction, and this longitudinal direction (length 506a) is arranged is almost parallel with the extending direction of television signal receiving antenna 117. Moreover, pickup antenna 506 has output terminal 506c which is connected to input terminal 503a (see Fig. 7B) and output terminal 506d which is open.

As described above, use of the zigzag printed pattern allows reduction in size of pickup antennas 504 and 506. Accordingly, pickup antennas 504 and 506 can be made smaller in television signal reception level than pickup antenna 502. Herein, an advantage similar to that described above can also be obtained even when the pickup antenna is a curved printed pattern in addition to the zigzag printed pattern.

Herein, an advantage similar to that described above can also be obtained even when a micro strip line or a metallic line is used as pickup antennas 502, 504 and 506.

(Fifth Embodiment)

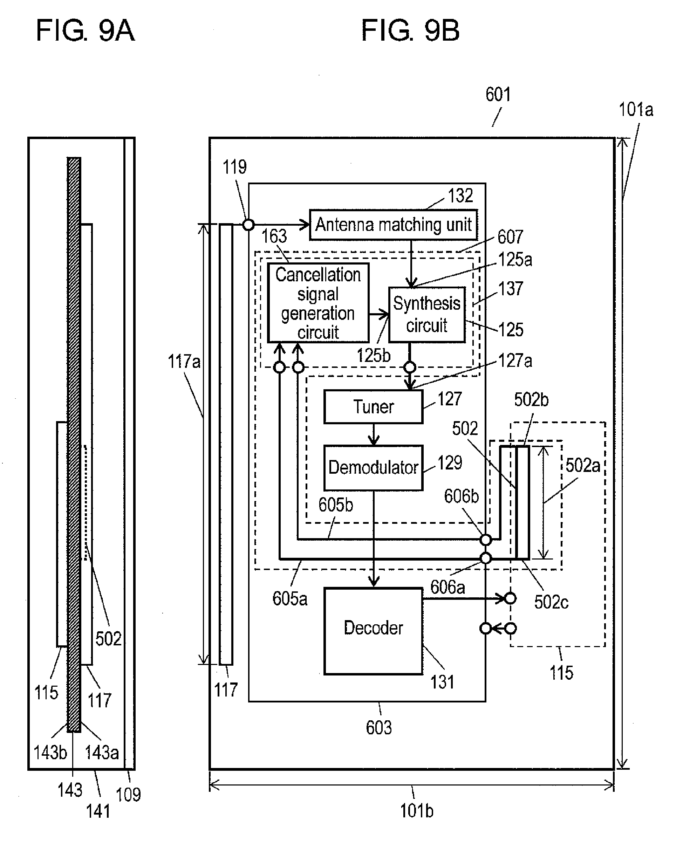

With reference to Figs. 1, 9A and 9B, hereinafter, description will be given of a fifth embodiment of the present invention. Fig. 9A is a perspective view showing a lateral side of each block in a portable device according to the fifth embodiment of the present invention. Fig. 9B is a perspective view showing a top side of each block in the portable device.

Portable device 601 according to this embodiment is different from portable device 501 according to the fourth embodiment shown in Figs. 7A and 7B in terms of the following point. That is, in portable device 601, balancing circuits 605a and 605b establish connection between pickup antenna 502 and cancellation signal generation circuit 163. Portable device 601 includes high-frequency receiver 603 to which television signal receiving antenna 117 and pickup antenna 502 are connected. High-frequency receiver 603 is provided with input terminal 606a connected to balancing circuit 605a and input terminal 606b connected to balancing circuit 605b. Herein, pickup antenna 502, balancing circuits 605a and 605b, and noise cancellation unit 137 form noise canceller 607.

As shown in Figs. 9A and 9B, pickup antenna 502, which is a printed pattern, is arranged in proximity to image formation unit 115 serving as a noise signal generation source. For example, a noise signal can be extracted with certainty in such a manner that image formation unit 115 is provided on top face 143a of substrate 143 while pickup antenna 502 is provided on top face 143a or bottom face 143b of substrate 143 so as to be located in proximity to image formation unit 115.

In portable device 601, moreover, balancing circuits 605a and 605b establish the connection between pickup antenna 502 and cancellation signal generation circuit 163. Therefore, even when a television signal is fed into an interconnection of each of balancing circuits 605a and 605b, cancellation signal generation circuit 163 cancels the fed television signal.

It is preferable that pickup antenna 502 may also be a balancing circuit, in addition to balancing circuits 605a and 605b. With this configuration, even when a television signal is fed into pickup antenna 502, cancellation signal generation circuit 163 can cancel the fed television signal.

Moreover, the feeding of the television signal into each of balancing circuits 605a and 605b can be further prevented in such a manner that a high-frequency amplifier having a balancing input and a balancing output is connected between pickup antenna 502 and cancellation signal generation circuit 163 so as to be located in proximity to an output of pickup antenna 502.

The reason therefor is as follows. That is, even when the television signal is fed into each of balancing circuits 605a and 605b, the high-frequency amplifier amplifies the noise signal level of pickup antenna 502 to increase a ratio between a level of a noise signal to be inputted to cancellation signal generation circuit 163 and a level of a television signal to be inputted to cancellation signal generation circuit 163.

Moreover, pickup antenna 504 shown in Fig. 8A or pickup antenna 506 shown in Fig. 8B may be used in place of pickup antenna 502. In Fig. 9A, pickup antenna 504 (see Fig. 8A) can be used in such a manner that output terminals 504c and 504d (see Fig. 8A) thereof are connected to input terminals 606a and 606b, respectively. The longitudinal direction corresponding to length 504a (see Fig. 8A) of pickup antenna 504 (see Fig. 8A) is almost parallel with an extending direction of television signal receiving antenna 117.

In Fig. 9B, pickup antenna 506 (see Fig. 8B) can be used in such a manner that output terminals 506c and 506d (see Fig. 8B) thereof are connected to input terminals 606a and 606b, respectively. The longitudinal direction corresponding to length 506a (see Fig. 8B) of pickup antenna 506 (see Fig. 8B) is almost parallel with the extending direction of television signal receiving antenna 117.

Thus, even when the orientation of television signal receiving antenna 117 is changed, pickup antennas 504 (Fig. 8A) and 506 (Fig. 8B) can be constantly made smaller in television signal reception level than television signal receiving antenna 117 at a predetermined rate.

Moreover, pickup antennas 504 (Fig. 8A) and 506 (Fig. 8B) can be reduced in size by virtue of a zigzag printed pattern or a curved printed pattern. Therefore, pickup antennas 504 and 506 can be made smaller in television signal reception level than pickup antenna 502.

Herein, an advantage similar to that described above can also be obtained even when a micro strip line or a metallic line is used as pickup antennas 502, 504 and 506.

(Sixth Embodiment)

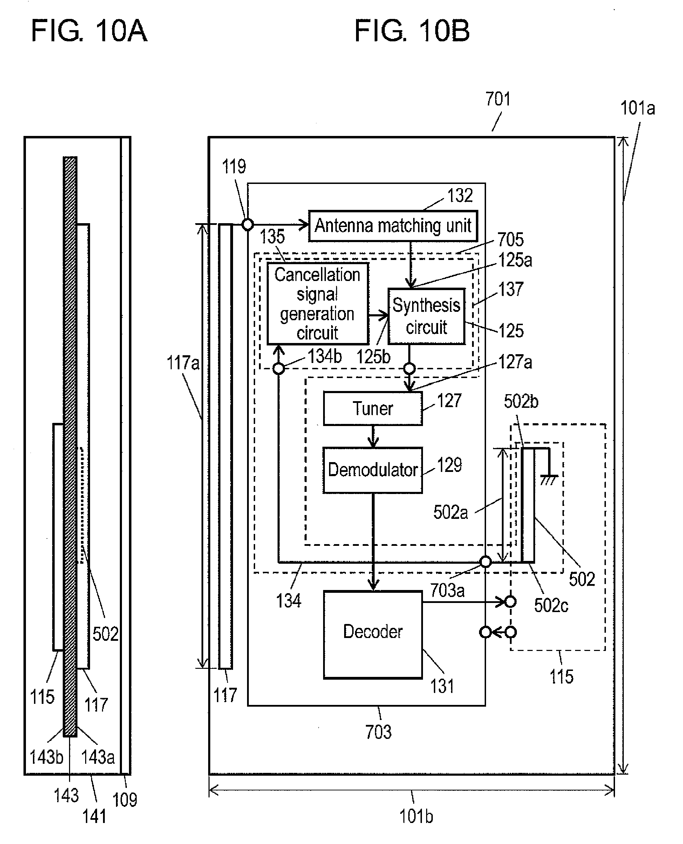

With reference to Figs. 1, 10A and 10B, hereinafter, description will be given of a sixth embodiment of the present invention. Fig. 10A is a perspective view showing a lateral side of each block in a portable device according to the sixth embodiment of the present invention. Fig. 10B is a perspective view showing a top side of each block in the portable device.

Portable device 701 according to this embodiment is different from portable device 501 according to the fourth embodiment shown in Figs. 7A and 7B in terms of the following point. That is, in portable device 701, pickup antenna 502 has first end 502b which is connected to a ground. Portable device 701 includes high-frequency receiver 703 to which television signal receiving antenna 117 and pickup antenna 502 are connected. Herein, pickup antenna 502 and noise cancellation unit 137 form noise canceller 705. Pickup antenna 502 also has second end 502c which is connected to cancellation signal generation circuit 135 through input terminal 703a of high-frequency receiver 703.

First end 502b of pickup antenna 502 is connected to the ground located in proximity to image formation unit 115 serving as a noise signal generation source. With this configuration, one ground is shared between pickup antenna 502 and image formation unit 115; therefore, pickup antenna 502 can extract a noise signal component from image formation unit 115 with certainty. Moreover, pickup antenna 502 can be satisfactorily reduced in impedance and, therefore, receives no television signal.

Herein, a process of shielding interconnection 134 provided between pickup antenna 502 and cancellation signal generation circuit 135 is similar to that shown in Figs. 2A and 2B.

Moreover, pickup antenna 504 shown in Fig. 8A or pickup antenna 506 shown in Fig. 8B may be used in place of pickup antenna 502. In Fig. 10A, pickup antenna 504 (see Fig. 8A) can be used in such a manner that output terminal 504c (see Fig. 8A) thereof is connected to input terminal 703a while output terminal 504d (see Fig. 8A) thereof is connected to the ground located in proximity to image formation unit 115. The longitudinal direction corresponding to length 504a (see Fig. 8A) of pickup antenna 504 (see Fig. 8A) is almost parallel with an extending direction of television signal receiving antenna 117.

In Fig. 10B, pickup antenna 506 (see Fig. 8B) can be used in such a manner that output terminal 506c (see Fig. 8B) thereof is connected to input terminal 703a while output terminal 506d (see Fig. 8B) thereof is connected to the ground located in proximity to image formation unit 115. The longitudinal direction corresponding to length 506a (see Fig. 8B) of pickup antenna 506 (see Fig. 8B) is almost parallel with the extending direction of television signal receiving antenna 117.

Thus, even when the orientation of television signal receiving antenna 117 is changed, pickup antennas 504 and 506 can be constantly made smaller in television signal reception level than television signal receiving antenna 117 at a predetermined rate.

Moreover, pickup antennas 504 (Fig. 8A) and 506 (Fig. 8B) can be reduced in size. Therefore, pickup antennas 504 and 506 can be made smaller in television signal reception level than pickup antenna 502. Accordingly, noise cancellation unit 137 can perform phase cancellation on a noise signal with certainty, without performing phase cancellation on a television signal.

Herein, an advantage similar to that described above can also be obtained even when a micro strip line or a metallic line is used as pickup antennas 502, 504 and 506.

(Seventh Embodiment)

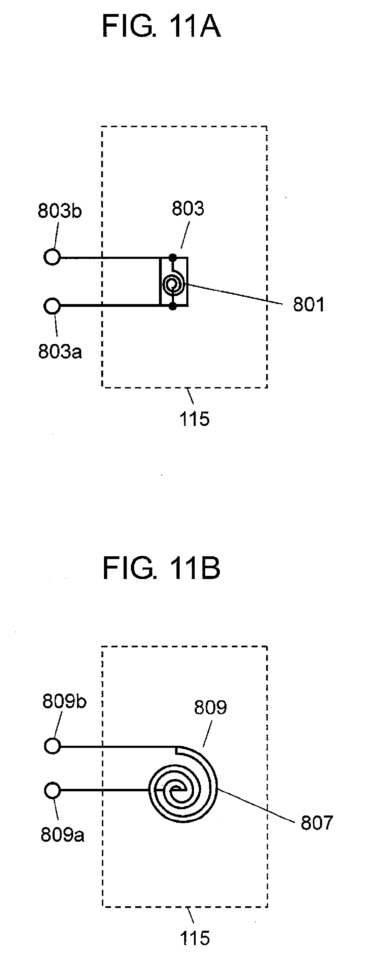

With reference to Figs. 11A and 11B, hereinafter, description will be given of a seventh embodiment of the present invention. Figs. 11A and 11B are schematic views each showing a pickup antenna of a portable device according to the seventh embodiment of the present invention. In the portable device according to this embodiment, each of the pickup antenna shown in Fig. 11A and the pickup antenna shown in Fig. 11B is used in place of pickup antenna 133 shown in Fig. 1. Herein, Figs. 11A and 11B are not plan views, but schematic views.

As shown in Fig. 11A, pickup antenna 803 includes chip inductor 801 and is provided with output terminals 803a and 803b. Pickup antenna 803 can be used as in the cases of the first to sixth embodiments in such a manner that output terminals 803a and 803b are connected as in the cases of output terminals 151c and 151d of pickup antenna 151 shown in Fig. 4A and output terminals 152c and 152d of pickup antenna 152 shown in Fig. 4B or output terminals 504c and 504d of pickup antenna 504 shown in Fig. 8A and output terminals 506c and 506d of pickup antenna 506 shown in Fig. 8B.

As shown in Fig. 11A, chip inductor 801 is of a type that a winding direction of a wire is parallel with an extending direction of substrate 143 on which chip inductor 801 is mounted, and is arranged in proximity to image formation unit 115 serving as a noise signal generation source.

Thus, the winding direction of the wire of chip inductor 801 can be brought into agreement with a traveling direction of noise generated by the noise signal generation source. That is, chip inductor 801 can be arranged such that the winding direction of the wire is perpendicular to an extending direction of a television signal receiving antenna. Herein, the winding direction refers to a direction of forming a roll of an inductor as a coil or a pattern.

This configuration allows enhancement in magnetic field coupling to the noise signal generation source. Further, chip inductor 801 can be reduced in size. Therefore, use of chip inductor 801 reduced in size allows prevention of feeding of an unnecessary television signal.

As shown in Fig. 11B, pickup antenna 809 includes spiral printed pattern 807 and is provided with output terminals 809a and 809b. Pickup antenna 809 can be used as in the cases of the first to sixth embodiments in such a manner that output terminals 809a and 809b are connected as in the cases of output terminals 151c and 151d of pickup antenna 151 shown in Fig. 4A and output terminals 152c and 152d of pickup antenna 152 shown in Fig. 4B or output terminals 504c and 504d of pickup antenna 504 shown in Fig. 8A and output terminals 506c and 506d of pickup antenna 506 shown in Fig. 8B.

As shown in Fig. 11B, printed pattern 807 is of a type that a winding direction of a printed pattern is parallel with the extending direction of substrate 143 on which printed pattern 807 is mounted, and is arranged in proximity to image formation unit 115 serving as a noise signal generation source.

Thus, the winding direction of printed pattern 807 can be brought into agreement with the traveling direction of the noise generated by the noise signal generation source. That is, printed pattern 807 can be arranged such that the winding direction of the printed pattern is perpendicular to the extending direction of the television signal receiving antenna.

This configuration allows enhancement in magnetic field coupling to the noise signal generation source. Herein, an advantage similar to that described above can also be obtained even when a printed pattern of one turn or not more than one turn is used as spiral printed pattern 807.

As described above, the printed pattern or the chip inductor is used as pickup antenna 502. An advantage similar to that described above can also be obtained even when a micro strip line or a metallic line is used as pickup antenna 502.

(Eighth Embodiment)

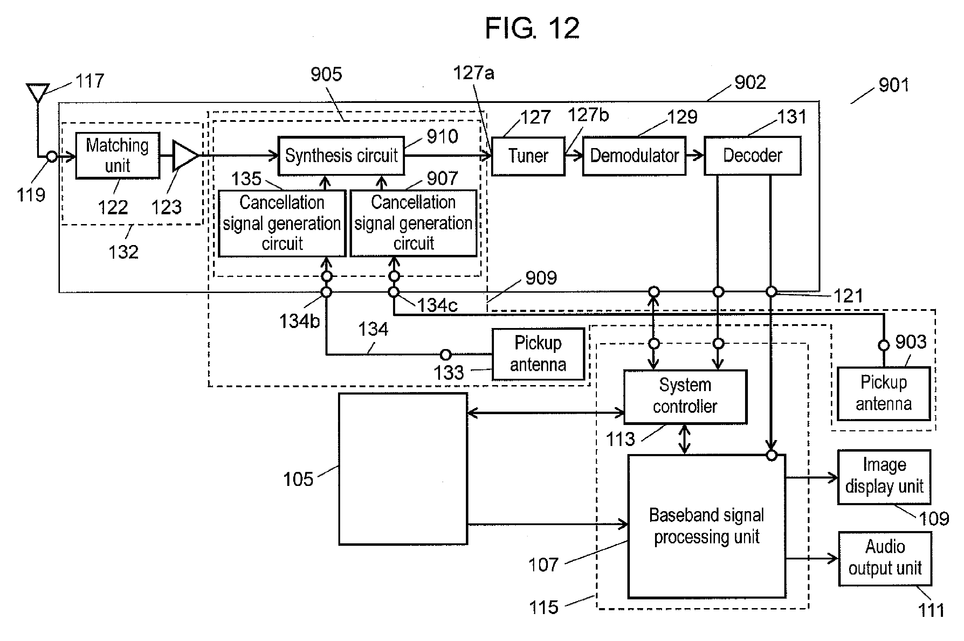

With reference to Fig. 12, hereinafter, description will be given of an eighth embodiment of the present invention. Fig. 12 is a block diagram showing portable device 901 according to the eighth embodiment of the present invention. Portable device 901 according to this embodiment is different from portable device 101 according to the first embodiment shown in Fig. 1 in terms of the following point. That is, portable device 901 includes noise cancellation unit 905 to which pickup antennas 133 and 903 are connected. More specifically, pickup antenna 133 is connected to noise cancellation unit 905 through second input 134b. On the other hand, pickup antenna 903 is connected to noise cancellation unit 905 through second input 134c.

As shown in Fig. 12, noise cancellation unit 905 is provided between antenna matching unit 132 and tuner 127. Noise cancellation unit 905 includes cancellation signal generation circuits 135 and 907, and synthesis circuit 910 that receives noise cancellation signals from cancellation signal generation circuits 135 and 907 and an output signal from antenna matching unit 132.

Antenna matching unit 132, noise cancellation unit 905, tuner 127, demodulator 129 and decoder 131 form high-frequency receiver 902. Moreover, noise cancellation unit 905, pickup antenna 133 and pickup antenna 903 form noise canceller 909.

Further, pickup antenna 133 is connected to cancellation signal generation circuit 135 through second input 134b. Moreover, pickup antenna 903 is connected to cancellation signal generation circuit 907 through second input 134c. Pickup antennas 133 and 903 are provided in proximity to noise signal generation sources such as image formation unit 115 and image display unit 109, respectively. With this configuration, a noise signal generated by image formation unit 115 is inputted to cancellation signal generation circuit 135 through pickup antenna 133. On the other hand, a noise signal generated by image display unit 109 is inputted to cancellation signal generation circuit 907 through pickup antenna 903. Based on noise cancellation signals from cancellation signal generation circuits 135 and 907, synthesis circuit 910 can perform phase cancellation on the noise signals fed into the television signal receiving antenna.

As described above, pickup antenna 133 can pick up the noise signal generated by image formation unit 115. Pickup antenna 903 can extract the noise signal generated by image display unit 109. That is, even in a case where there are a plurality of noise signals, cancellation signal generation circuits 135 and 907 can cancel the noise signals, leading to acceleration in processing speed for noise cancellation.

Herein, the pickup antenna described in each of the first to seventh embodiments may be used as each of pickup antennas 133 and 903.

According to this embodiment, as described above, upon reception of a television signal, even when television signal receiving antenna 117 receives noise signals from the plurality of noise signal generation sources in portable device 901, the plurality of pickup antennas 133 and 903 and noise cancellation unit 905, which includes cancellation signal generation circuits 135 and 907 to which pickup antennas 133 and 903 are connected, respectively, can cancel the plurality of noise signals. Accordingly, portable device 901 can overcome the problem caused by the noise signal, that is, can be considerably improved in reception sensitivity of a television broadcast in a weak electric field area.

Herein, pickup antenna 133 is provided on a line connecting between television signal receiving antenna 117 and image formation unit 115 so as to be located in proximity to image formation unit 115. Moreover, pickup antenna 903 is provided on a line connecting between television signal receiving antenna 117 and image display unit 109 so as to be located in proximity to image display unit 109. Thus, pickup antennas 133 and 903 can extract the noise signals, which are fed from image formation unit 115 and image display unit 109 into television signal receiving antenna 117, with good accuracy.

The present invention is applicable to a portable telephone, a portable game machine, a portable computer, a portable electronic dictionary and the like each capable of receiving a television signal.

**Claims**

1.  A noise canceller comprising:

    a pickup antenna that is arranged in proximity to a noise signal generation source to extract a noise signal generated by the noise signal generation source; and
    a noise cancellation unit that has a first input for receiving a television signal from a television signal receiving antenna and a second input for receiving the noise signal extracted by the pickup antenna, wherein
    the noise cancellation unit removes a noise signal
    fed from the television signal receiving antenna, based on the noise signal extracted by the pickup antenna.

2.  The noise canceller according to claim 1, wherein
    the noise cancellation unit includes:

    a cancellation signal generation circuit that adjusts a phase and a gain of the noise signal extracted by the pickup antenna; and
    a synthesis circuit that has a first input for receiving the television signal from television signal receiving antenna and a second input for receiving a noise cancellation signal from the cancellation signal generation circuit.

3.  The noise canceller according to claim 1, wherein
    the pickup antenna has a length which is shorter than a length of the television signal receiving antenna, and has a longitudinal portion which is provided in parallel with the television signal receiving antenna.

4.  The noise canceller according to claim 1, wherein
    the pickup antenna has a longitudinal portion which is shorter in length than the television signal receiving antenna and is provided so as to be perpendicular to the television signal receiving antenna.

5.  The noise canceller according to claim 2, wherein
    the pickup antenna is one of a printed pattern and a chip inductor, and
    one of the printed pattern and the chip inductor has a winding direction which is brought into agreement with a traveling direction of the noise signal generated by the noise signal generation source and is perpendicular to an extending direction of the television signal receiving antenna.

6.  The noise canceller according to claim 1, wherein
    the pickup antenna has two ends each of which is connected to an input of the cancellation signal generation circuit through an interconnection of a balancing circuit.

7.  The noise canceller according to claim 2, further comprising
    a high-frequency amplifier that is provided between the pickup antenna and the cancellation signal generation circuit so as to be located in proximity to an output of the pickup antenna.

8.  The noise canceller according to claim 1, wherein
    the second input of the noise cancellation unit is divided into two,
    a first pickup antenna is arranged in proximity to a first noise signal generation source to extract a first noise signal generated by the first noise signal generation source,
    a second pickup antenna is arranged in proximity to a second noise signal generation source to extract a second noise signal generated by the second noise signal generation source, and
    the noise cancellation unit receives the television signal from the television signal receiving antenna at the first input, receives the first noise signal extracted by the first pickup antenna at one of the second inputs, receives the second noise signal extracted by the second pickup antenna at the other one of the second inputs, and removes the first and second noise signals from the television signal fed from the television signal receiving antenna.

9.  A high-frequency receiver comprising:

the noise canceller according to claim 1;
a tuner that receives signals from the noise canceller and selects one from the received signals; and
a demodulator that receives the signal from the tuner and outputs a demodulation signal.

**10.** A portable device comprising:

the high-frequency receiver according to claim 9;
a baseband signal processing unit that receives an output signal from the high-frequency receiver;
an image display unit that is connected to the baseband signal processing unit and displays an image signal based on a television signal; and
a system controller that controls the high-frequency receiver and the image display unit.

# FIG. 1

EP 2 086 219 A2

# FIG. 2A

# FIG. 2B

FIG. 3A

Level

171

173

179

Frequency

FIG. 3B

Level

181

183

Frequency

FIG. 3C

Level

185

189

187

183

Frequency

# FIG. 4A

151d

151

151a

151c

151b

115

# FIG. 4B

152d

152

152a

152c

152b

115

# FIG. 5A

# FIG. 5B

# FIG. 6A

# FIG. 6B

# FIG. 7A

# FIG. 7B

# FIG. 8A

504d

504

504a

504c

504b

115

# FIG. 8B

506

506d

506a

506c

506b

115

# FIG. 9A

# FIG. 9B

101a

601

119

132
Antenna matching unit

163

Cancellation signal generation circuit

607
125a
137
125

Synthesis circuit

125b

127a

Tuner — 127

502b

502

Demodulator — 129

502a

605b

606b

605a

606a

502c

Decoder

115

117a

117

131

603

115

117

502

143b    143a

143    109

141

101b

# FIG. 10A

# FIG. 10B

FIG. 10A

FIG. 10B

701

101a

119

132

Antenna matching unit

135

705

125a

137

125

Cancellation signal generation circuit

Synthesis circuit

117a

134b   125b

127a

Tuner    127

502b

Demodulator   129

502a

134

703a

502

502c

115

Decoder

131

117

703

502

115   117

143b   143a

143

109

141

101b

# FIG. 11A

803b

803

801

803a

115

# FIG. 11B

809b

809

807

809a

115

# FIG. 12

EP 2 086 219 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008022294 A